# EUROPEAN PATENT SPECIFICATION

(11) **EP 1 520 774 B1**
(45) Date of publication and mention of the grant of the patent: **22.11.2006**
(21) Application number: 04104672.3
(22) Date of filing: 24.09.2004
(51) Int. Cl.: B62J 35/00, B62K 11/10

(54) **Fuel tank structure of motorcycle**
Kraftstofftank für Motorrad
Réservoir à carburant pour motocyclette

(30) Priority: 30.09.2003 JP 2003376281
(43) Date of publication of application: 06.04.2005
(73) Proprietor: HONDA MOTOR CO., Ltd., Tokyo (JP)
(72) Inventor: Hayashi, Hideki, SAITAMA (JP); Doi, Takashi, SAITAMA (JP); Morikawa, Yuichiro, SAITAMA (JP)
(74) Representative: Poulin, Gérard

(56) References cited:
- US-A1- 2001 018 932
- US-B1- 6 253 790
- PATENT ABSTRACTS OF JAPAN vol. 2003, no. 12, 5 December 2003 (2003-12-05) & JP 2004 182018 A (HONDA MOTOR CO LTD), 2 July 2004 (2004-07-02)

## Description

### TECHNICAL FIELD

The present invention relates to a fuel tank of a scooter-type motorcycle in which a fuel tank is arranged below a step floor and a fuel pump unit is incorporated in the fuel tank.

### BACKGROUND ART

Various types of scooter-type motorcycles each of which arranges a fuel tank below a step floor and incorporates a fuel pump unit in the inside of the fuel tank have been practically used.

Conventionally, there has been known a scooter-type motorcycle which arranges a fuel tank in the vicinity of a step floor: see for example document JP-A-2003-120450 (Fig. 3) which is explained below.

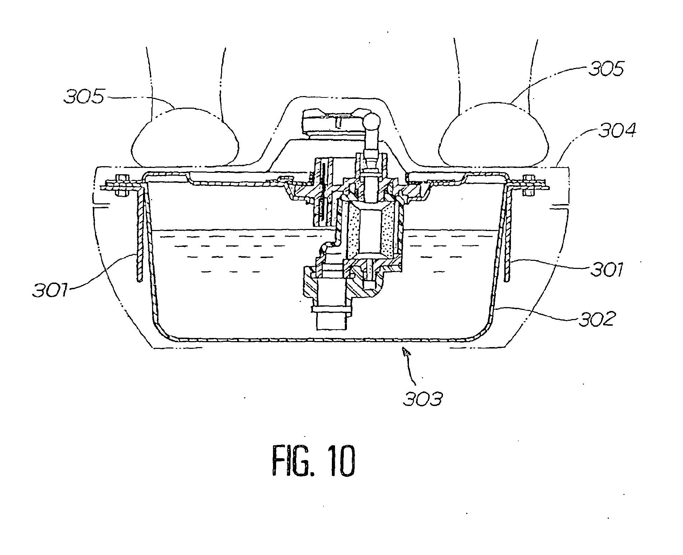

Fig. 10 is a view for explaining the basic constitution of the prior art. The drawing shows the structure in which a fuel tank 302 is placed on left and right frames 301, 301 of a car body frame, a fuel pump unit 303 is incorporated in the fuel tank 302, and a step floor 304 is arranged above this fuel tank 302 and the fuel pump unit 303. Numeral 305 indicates left and right legs of a rider.

As the consideration to protect the fuel pump unit 303, although there has been proposed a method which increases a wall thickness of the fuel tank 302, a weight of the fuel tank 302 is largely increased.

Although there has been also proposed a method which provides a frame separately from the fuel tank, there may be a case that this brings about the increase of parts, the increase of man-hours for assembling or influences the appearance.

Another example may be found in US 2001/018932 wherein the lower plate of a fuel pump unit is screwed on a setting plate of a fuel tank structure.

### DISCLOSURE OF THE INVENTION

It is an object of the present invention to provide the fuel tank structure which considers the protection of a fuel pump unit while suppressing the increase of a weight of a fuel tank and maintaining the appearance.

The invention is set out in claim 1.

According to the invention described in claim 1, since the fuel pump unit per se can increase the strength thereof, it is unnecessary to increase a wall thickness of the fuel tank whereby the fuel tank can be held light-weighted. Further, since the existing setting plate can be utilized, it is unnecessary to provide a part separately whereby the appearance of the fuel tank can be maintained.

Dependent claim 2 is directed to a fuel tank structure of a motorcycle adopting a scooter type in which a fuel tank is arranged below a step floor and a fuel pump unit is incorporated in the fuel tank, wherein fuel pump unit is extended downwardly into the inside of the fuel tank and, at the same time, a guard member which extends downwardly below the fuel pump unit is mounted in the inside of the fuel tank.

By providing the guard member which extends downwardly below the fuel pump unit in the inside of the fuel tank, the guard member is arranged in the inside of the fuel tank and hence, the appearance of the fuel tank can be maintained. Further, the increase of the weight can be restricted to a minimum level.

Dependent claim 3 is further characterized in that the guard member is a cylinder which surrounds the fuel pump unit and includes an opening portion for accessories such as an intake port of a pump, a float for detecting running out of fuel or a suction filter.

Since the guard member is the cylinder which surrounds the fuel pump unit, it is possible to achieve the compacting and the reduction of weight of the guard member simultaneously.

Dependent claim 4 is characterized in that materials of the guard member and the setting plate are metal.

Since the material of the guard member and the material of the setting plate are metal, the consideration on the protection of the fuel pump unit is further enhanced.

Dependent claim 5 is characterized in that a fuel tank includes a plurality of car-body side fastening holes and at least one of the car-body side fastening holes is formed of an elongated hole extending outwardly with respect to the fuel tank and or a slit-added hole to which a slit which is communicated with the outside is added.

When an excessively large external force is applied to the fuel tank, the fuel tank is displaced laterally along the elongated hole or the slit and this displacement can absorb the external force. Accordingly, it is possible to decrease the influence which the fuel pump unit receives.

### BRIEF DESCRIPTION OF THE DRAWINGS

The best mode for carrying out the present invention is explained in conjunction with attached drawings hereinafter. Here, the drawings are assumed to be observed in the direction of symbols, wherein:
Fig. 1 is a side view of a motorcycle according to the present invention.
Fig. 2 is an enlarged cross-sectional view of a portion 2 in Fig. 1.
Fig. 3 is a view as viewed from an arrow direction 3 in Fig. 2.
Fig. 4 is a cross-sectional view taken along a line 4-4 in Fig. 3.
Fig. 5 is a cross-sectional view taken along a line 5-5 in Fig. 3.
Fig. 6 is a side view of a fuel pump unit according to the present invention.
Fig. 7 is a view as viewed from an arrow direction 7 in Fig. 6.
Fig. 8 is an appearance view of the fuel tank according to the present invention.
Fig. 9 is a view showing a mode of a fastening hole according to the present invention.
Fig. 10 is a view for explaining the basic constitution of the prior art.

### DETAILED DESCRIPTION OF THE BEST MODE FOR CARRYING OUT THE INVENTION

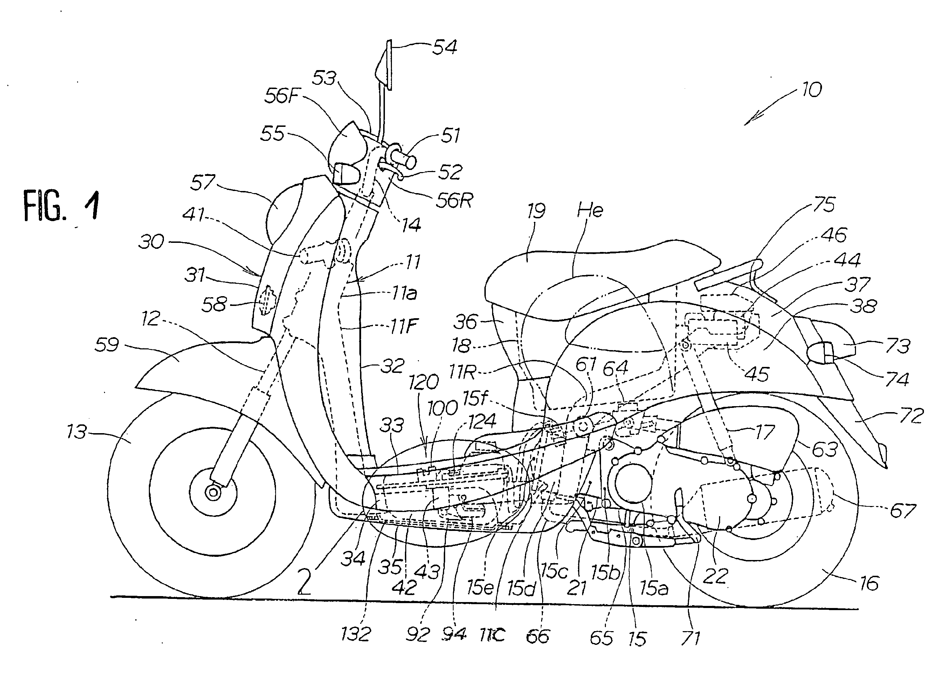

Fig. 1 is a side view of a motorcycle 10 which includes, as main parts thereof, a car body frame 11, a front fork 12 which is mounted on a head pipe 11a of the car body frame 11, a front wheel 13 which is mounted on the front fork 12, a handle 14 which is connected to the front fork 12, a unit swing engine 15 which is mounted on a rear portion of the car body frame 11 in a vertically swingable manner, a rear wheel 16 which is mounted on a unit swing engine 15, a rear cushion unit 17 which mounts a rear end portion of the unit swing engine 15 thereon in a suspended manner, an accommodating box 18 which is mounted on an upper portion of a rear portion of the car body frame 11, and a seat 19 which is arranged on the accommodating box 18 such that the seat 19 can be opened and closed.

The unit swing engine 15 includes a belt converter case 15a, a crankcase 15b, a cylinder 15c, a cylinder head 15d, a head cover 15e, and an injector 15f which is mounted on a head-integral intake manifold which is integrally formed with the cylinder head 15d.

The car body frame 11 is constituted by connecting a diecast front frame 11F which is integrally molded with the head pipe 11a and a diecast rear frame 11R by means of a connecting portion 11C.

The unit swing engine 15 is constituted of an engine 21 and a belt converter variable-speed transmission 22 having a centrifugal clutch. The engine 21 is a water-cooled 4-cycle engine which projects a cylinder portion thereof between the accommodating box 18 and the fuel tank 42 and is inclined in the substantially horizontal direction.

Further, the motorcycle 10 is configured such that the car body frame 11 is covered with a body cover 30. The body cover 30 includes a front cover 31 which covers a front portion of a head pipe 11a, a leg shield 32 which sandwiches the head pipe 11a, covers a rear portion of the front cover 31 and also covers front portions of leg portions of a driver, a step floor 33 (a low-floor type foot step plate) on which the driver places his or her feet, a pair of left and right floor side covers 34 which extend downwardly from outer peripheries of the step floor 33, under covers 35 which cover a space between lower peripheries of the floor side covers 34, a seat lower cover 36 which covers a front portion around a lower portion of the seat 19, a rear cover 37 which covers a lower rear portion of the seat 19 and a position above the rear wheel 16, and a pair of left and right side covers 38.

In such a motorcycle 10, a main switch (an ignition key cylinder) 41 is arranged at a portion of the leg shield 32, a fuel tank 42 and a fuel pump 43 which is incorporated in the inside of the fuel tank 42 are arranged below the step floor 33, and a tray (not shown in the drawing) is formed on an upper end portion of the rear portion of the car body frame 11. Further, a reserve tank 44 for radiator, a battery 45 and a control unit 46 are arranged on the tray.

In the drawing, numeral 51 indicates a handle grip, numeral 52 indicates a left brake lever, numeral 53 indicates a meter panel, numeral 54 indicates a mirror, numeral 55 indicates a pair of left and right front blinkers, numeral 56F indicates a front-side handle cover, numeral 56R indicates a rear-side handle cover, numeral 57 indicates a head lamp, numeral 58 indicates a horn which is disposed in the inside of the front cover 31, numeral 59 indicates a front fender which is rotated together with the front fork 12, numeral 61 indicates a pair of left and right engine hangers, numeral 63 indicates an air cleaner which is provided at the left side of the car body, numeral 64 indicates a throttle, numeral 65 indicates a radiator for cooling engine which is provided to a right end of a crankshaft 21a of the engine 21, numeral 66 indicates an exhaust pipe for engine, numeral 67 indicates an exhaust muffler which is provided at the right side of the car body, numeral 71 indicates a main stand, numeral 72 indicates a rear fender, numeral 73 indicates a tail lamp, numeral 74 indicates rear blinker, numeral 75 indicates a carrier, and symbol He indicates a helmet.

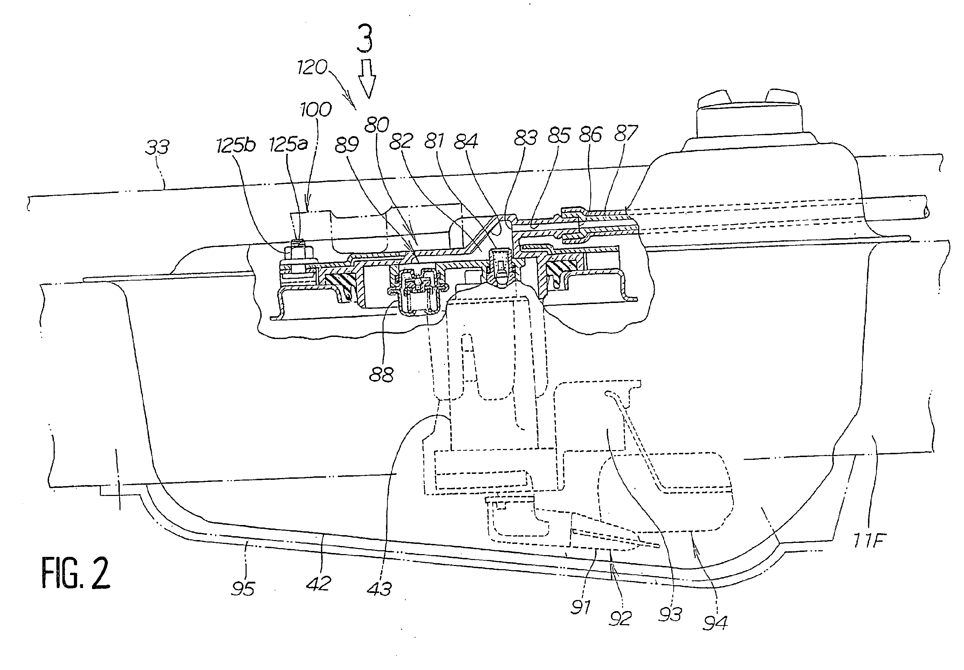

Fig. 2 is an enlarged cross-sectional view of a portion 2 in Fig. 1 and shows a fuel pump case 80. The fuel pump case 80 is a case which is attached to a body of the fuel pump 43 and is used for mounting the body of the fuel pump 43 to a given portion of the fuel tank 42, and incorporates a passage 82 for fuel which extends from a discharge port 81 of the fuel pump 43 to the engine 21 (see Fig. 1). The passage 82 for fuel includes a fuel outlet 83 which is arranged to cross the discharge port 81 of the fuel pump and is provided with an inclined guide face 84 for ensuring a smooth flow of the fuel discharged from the discharge port 81 of the fuel pump toward the fuel outlet 83.

Then, a fuel supply passage 85 is attached to the fuel outlet 83 and a fuel pipe 87 is mounted on an outlet 86 of the fuel supply passage 85 such that the fuel pipe 87 is directed to the engine side.

Further, a fuel discharge port 89 which is communicated with a relief valve 88 is provided to the passage 82 for fuel.

Here, numeral 91 indicates an intake port which sucks fuel from the fuel tank 42, numeral 92 indicates a suction filter, numeral 93 indicates a fuel run-out detection unit, andnumeral 94 indicates a fuel run-out detection float.

Further, a member 95 indicated by an imaginary line indicates a protective frame. Since the protective frame 95 is arranged below the fuel tank 42 and also below the fuel pump unit 120 and a width of the protective frame 95 is set to a value at least equal to a width of the fuel pump unit 120 or more, the fuel tank 42 can cope with not only a downward load from the step floor 33 but also an upward load from a road surface side due to the provision of the protective frame 95.

A member which is indicated by an imaginary line is a sub frame 100 which is interposed between the step floor 33 and the fuel pump unit 120 and this sub frame 100 is explained in detail.

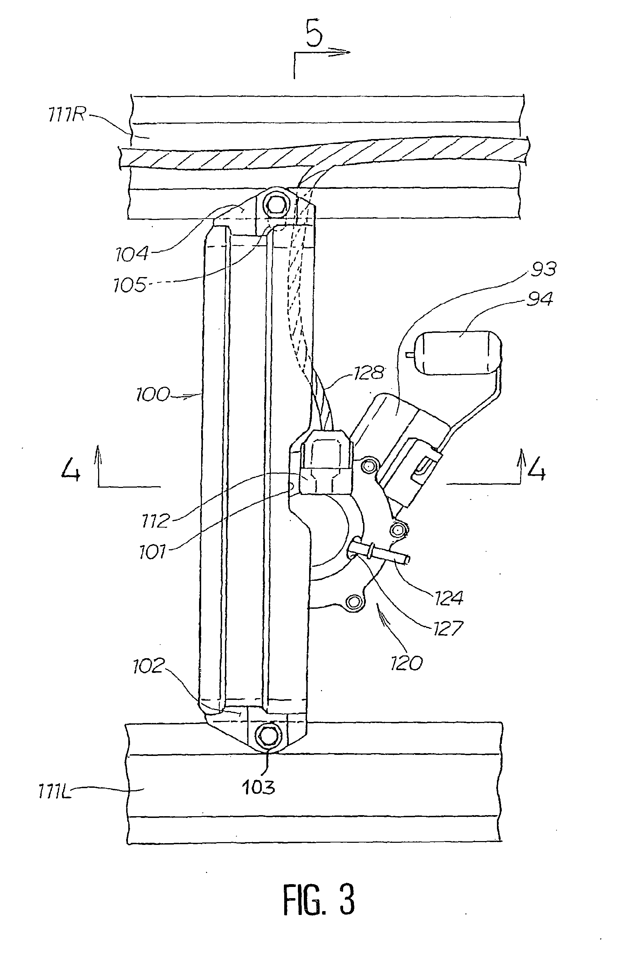

Fig. 3 is a view as viewed in an arrow direction in Fig. 2. However, for facilitating the explanation, the fuel tank 42 is omitted.

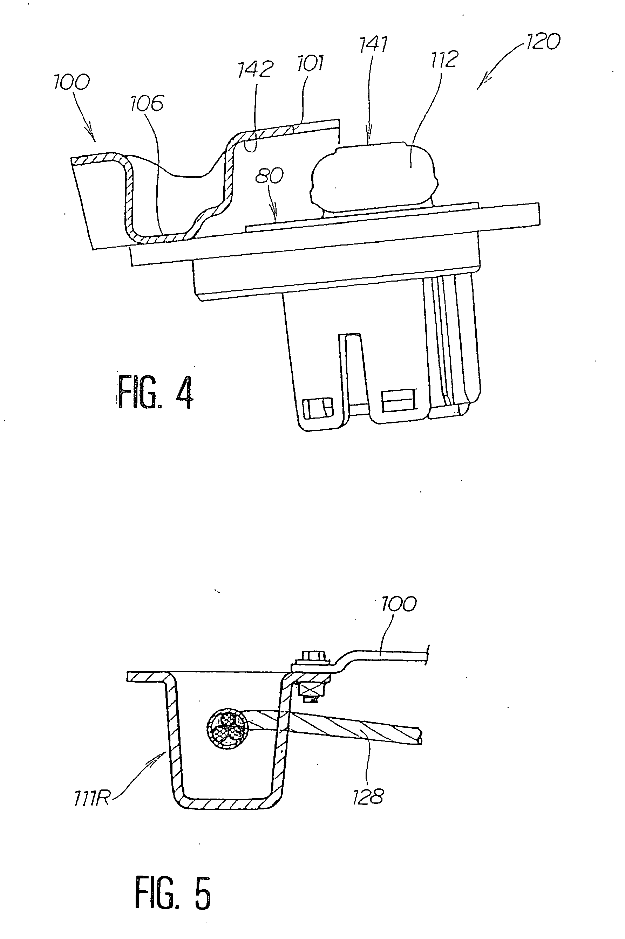

The sub frame 100 is a thin cross member as shown in the drawing, for example. Although a cross-sectional shape is explained in conjunction with Fig. 4, a notch 101 is formed in a center rear portion of the sub frame 100 to obviate the interference with a coupler 112, a circular hole 103 is formed in a left end portion 102 of the sub frame 100, and an elongated hole 105 is formed in a right end portion 104 of the sub frame 100. The left end portion 102 is fastened with a bolt to a left frame 111L of the car body frame using the circular hole 103, while the right end portion 104 is fastened with a bolt to a right frame 111R of the car body frame using the elongated hole 105. That is, the sub frame 100 of this embodiment is a member which is bridged between the left and right frames 111L, 111R of the car body frame.

Fig. 4 is a cross-sectional view taken along a line 4-4 in Fig. 3. The sub frame 100 is formed of a press product made of a steel plate and has a recessed portion 106 which is largely indented downwardly. A coupler 112 is arranged at the right side in the drawing (rear side of the car body) of the recessed portion 106.

Fig. 5 is a cross-sectional view taken along a line 5-5 in Fig. 3. The right frame 111R is formed of a U-shaped cross-sectional body which opens upwardly. Fig. 5 shows a state that a harness 128 passes through the cross section.

Although the sub frame 100 described above is arranged outside the fuel tank 42, it is preferable not to add the sub frame 100 to enhance the appearance more. Accordingly, the structure which can protect the fuel pump unit 120 without arranging a member outside the fuel tank 42 is explained next.

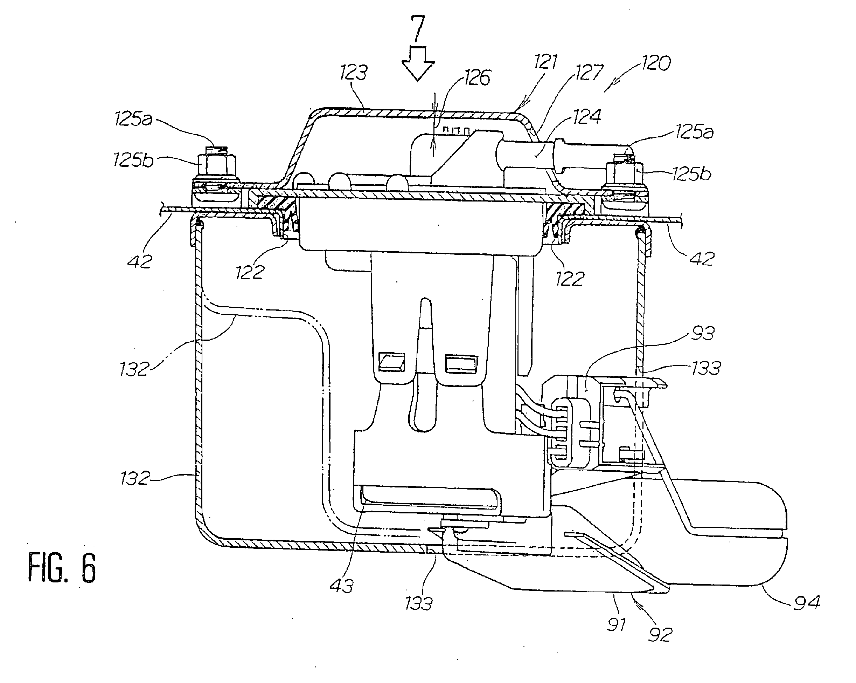

Fig. 6 is a side view of the fuel pump unit according to the present invention. In the drawing, with respect to parts which are common with the parts shown in Fig. 2, symbols are directly used without modifying and the explanations of these parts are omitted.

In general, the fuel pump unit 120 is fixed to the fuel tank 42 side using a disc-like plate which is referred to as a setting plate 121. In the present invention, a center portion opening 122 formed in the fuel tank is closed with a lid portion 123 of the setting plate 121 and an opening which allows a discharge pipe 124 which extends from the fuel pump unit and the harness 128 (see Fig. 3) to pass therethrough is formed in the lid portion 123, while the settingplate 121 is placedon the fuel pump unit 120. However, to ensure the fastening ability of bolts 125a and nuts 125b, a gap 126 is ensured below the lid portion 123.

That is, in the fuel pump unit 120, an upper surface portion which covers an upper portion of the pump unit 120 is formed on the setting plate 121 which is mounted on the fuel tank 42 and, at the same time, an opening portion 127 which allows the pipe extending from the fuel pump unit 120 to pass therethrough or an opening portion 129 which allows the harness to pass therethrough are formed in the setting plate 121.

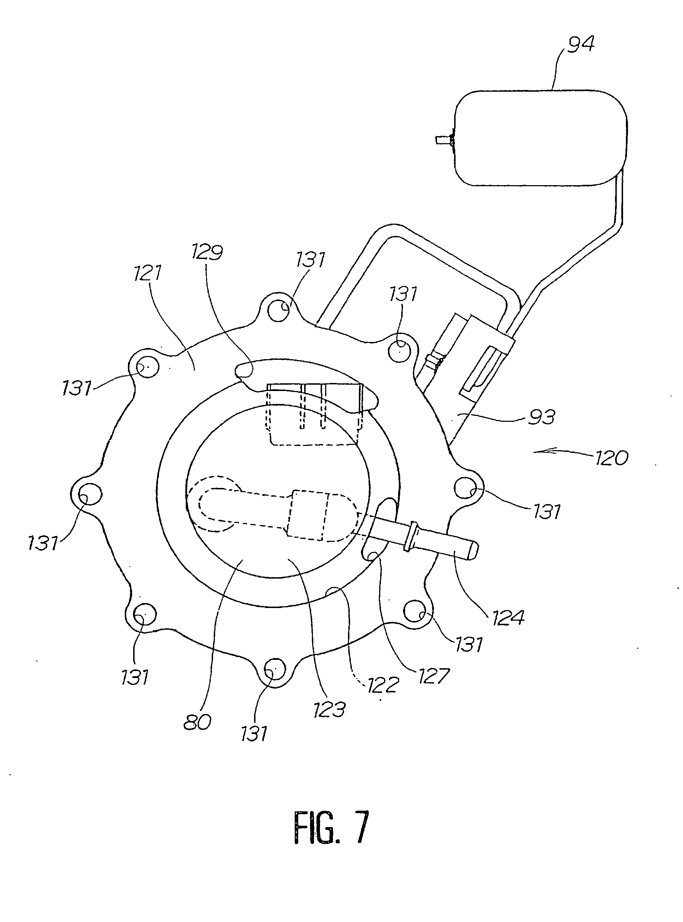

Fig. 7 is a view as viewed from an arrow direction in Fig. 6. As shown in the drawing, the setting plate 121 is a disc-like plug plate which closes the center portion opening 122 formed in the fuel tank with the lid portion 123, forms the opening portion 127 for the discharge pipe 124 which allows the pipe extending from the fuel pump unit 120 to pass therethrough or the opening portion 129 which allows the harness 128 (see Fig. 3) to pass therethrough in the lid portion 123, and has a plurality of bolt holes 131 in an outer peripheral portion thereof.

Returning back to Fig. 6, this embodiment is characterized in that the fuel pump unit 120 is extended downwardly into the inside of the fuel tank 42 and, at the same time, a guard member 132 which is extended below the fuel pump unit 120 is mounted in the inside of the fuel tank 42.

The guard member 132 is preferably formed of a bottomed cylinder and, when necessary, an opening 133 for a suction filter 92, a fuel run-out detection float 94 and an intake port 91 is formed in the guard member 132.

The guard member 132 may have a simple shape indicated by an imaginary line. Provided that a lower end of the guard member 132 is arranged below the fuel pump unit 120, the shape and the structure of the guard member 132 can be freely changed.

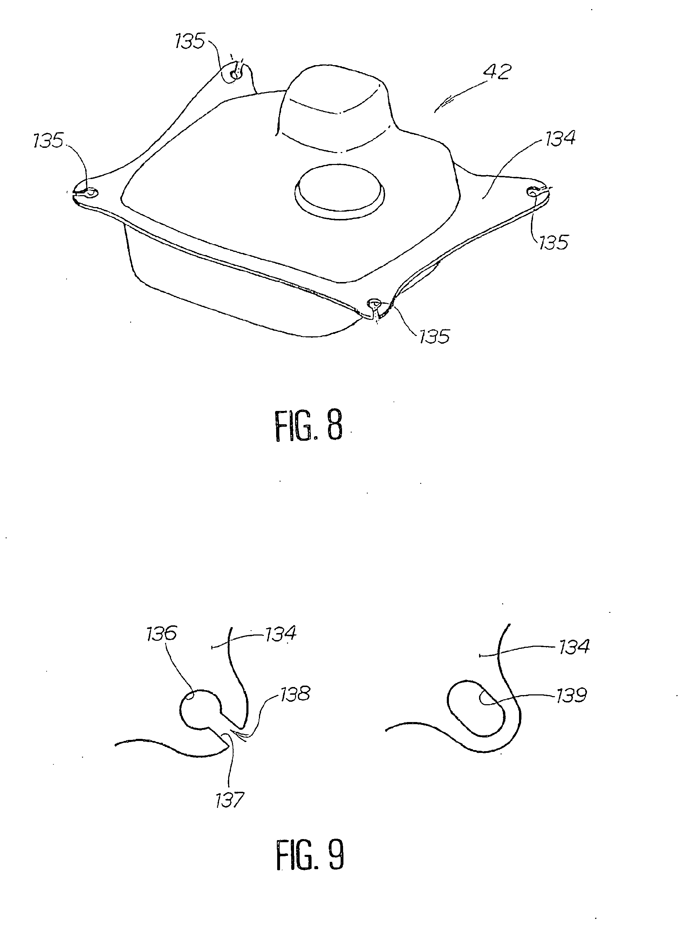

Fig. 8 is an appearance view of the fuel tank according to the present invention, wherein the drawing shows a state in which a plurality of car-body-side fastening holes 135 are formed in a flange 134 of the fuel tank 42.

Fig. 9 is a view showing a state of the fastening holes according to the present invention, wherein (a) shows a slit-added circular hole 138 which forms a slit 137 leading to the outside in a circular hole 136 and (b) shows an elongated hole 139 which extends to the outside.

When an excessively large external force is imparted to the fuel tank 42 (see Fig. 8), the fuel tank 42 is displaced laterally along the elongated hole 139 or the slit 137. This displacement absorbs the external force. Accordingly, it is possible to protect the fuel pump unit 120 (see Fig. 6) from the external force.

Although all of the fastening holes are formed of the elongated hole 139 or the slit-added circular hole 138 in this embodiment, even when one of these fastening holes is formed of the elongated hole 139 or the slit-added circular hole 138, it is possible to obtain the substantially same advantageous effect.

The manner of operation of the sub frame 100 having the above-mentioned constitution is explained.

First of all, as shown in Fig. 2, since the sub frame 100 is interposed between the step floor 33 and the fuel pump unit 120, it is possible to make the sub frame 100 support a load applied to the step floor 33. As a result, there is no possibility that the load is applied to the fuel pump unit 120 from the step floor 33 side.

Secondly, as shown in Fig. 3, since the sub frame 100 is mounted such that the sub frame 100 bridges the left and right frames 111L, 111R formed along the left and the right of the fuel pump unit 120, it is possible to obtain the sufficiently long support span whereby it is possible to make the sub frame 100 easily and sufficiently cover the fuel pump unit 120.

Thirdly, as shown in Fig. 3, since the sub frame 100 is overlapped to an approximately half of the fuel pump unit 120 in a plan view, it is possible to arrange the discharge pipe of the fuel pump unit 120, the coupler 112, the harness 128 and the like on the remaining half portion.

Fourthly, the engine 21 and a fuel pump unit control unit 46 are provided behind the step floor 33 as shown in Fig. 1 and the sub frame 100 is overlapped to only the substantially front half of the fuel pump unit 120 in a plan view as shown in Fig. 3 and hence, it is possible to arrange the discharge pipe 124 of the fuel pump unit 120, the coupler 112, the harness 128 and the like in the vicinity of the engine 21 and the fuel pump unit control unit 46 whereby the length of the pipe and the length of the harness can be shortened and, at the same time, the bonding and connecting operations can be readily performed.

Fifthly, as shown in Fig. 3, the sub frame 100 is provided with the notch 101 (the notch 101 may be replaced with a hole portion) which prevents the interference of the sub frame 100 with electric components attached to the fuel pump unit 120 or the discharge pipe 124 of the fuel pump unit 120 and hence, it is possible to ensure the easiness of connection of the harness 128, the coupler 112, pipes while making the sub frame 100 overlapped to the fuel pump unit 120 as much as possible.

Sixthly, metal is used as the material of the sub frame 100 and resin is used as the material of the step floor 33. As a result, it is possible to reduce the weight of the step floor 33 (see Fig. 1) and, at the same time, it is possible to ensure the strength and the rigidity of portions where the strength and the rigidity are required using metal as the material of the sub frame 100.

Seventhly, as shown in Fig. 3, by aligning the mounting and dismounting direction of the coupler 112 with the direction which is perpendicular to one frame 111R out of the left and right frames 111L, 111R arranged along the left and the right of the fuel pump unit 120 and is horizontal and, at the same time, by arranging the harness 128 extending from the coupler 112 along one frame 111R, it is possible to shorten the length of the harness 128.

Eighthly, as shown in Fig. 3, by arranging the harness 128 extending from the coupler 112 along one frame 111R and the sub frame 100, it is possible to protect the harness 128 using the frame 111R and the sub frame 100. Further, since the harness 128 can be held in the frame 111R, a harness retaining jig can be simplified.

Ninthly, as shown in Fig. 3, since the notch 101 which is formed in the sub frame 100 is formed corresponding to the shape of the coupler 112, it is possible to sufficiently overlap the fuel pump unit 120 to the sub frame 100.

Tenthly, as shown in Fig. 4, since an upper end 141 of the fuel pump unit 120 is arranged at a position higher than a lowermost portion 142 of the sub frame 100, the position of the fuel pump unit 120 is not lowered even when the sub frame 100 is provided whereby it is possible to maintain the step floor 33 at the low position.

Eleventhly, as shown in Fig. 4, since the recessed portion 106 which is indented downwardly is formed in the sub frame 100 and an upper end 141 of the fuel pump unit 120 is arranged on the side of the recessed portion 106, it is possible to skillfully combine the sub frame 100 and the upper portion of the fuel pump unit 120.

Twelfthly, as shown in Fig. 2, since the protective frame 95 is arranged below the fuel tank 42 and also below the fuel pump unit 120 and the width of the protective frame 95 is set to at least the width of the fuel pump unit 120 or more, it is possible to make the fuel tank 42 cope with not only the downward load from the step floor 33 but also the upward load from the road surface side due to the provision of the protective frame 95.

Thirteenthly, as shown in Fig. 6, since the upper surface of the fuel pump unit 120 is suppressed by the setting plate 121 so as to prevent the upward movement of the unit 120, it is possible to increase the strength of the fuel pump unit per se.

As a result, it is unnecessary to increase the wall thickness of the fuel tank 42 and hence, the fuel tank 42 can be light-weighted. Further, since the existing setting plate 121 can be utilized directly, the separate member is not necessary and hence, it is possible to maintain the appearance of the fuel tank 42.

Fourteenthly, as shown in Fig. 6, since the guard member 132 which extends downwardly below the fuel pump unit 120 is mounted in the inside of the fuel tank 42, it is possible to protect the fuel pump unit 120 from the external force using the guard member 132. Since the guard member 132 is arranged in the inside of the fuel tank 42, it is possible to maintain the appearance of the fuel tank 42. Further, by reducing the weight of the guard member 132, it is possible to suppress the increase of the weight to a minimum level.

Fifteenthly, as shown in Fig. 6, since the guard member 132 is the cylinder which surrounds the fuel pump unit 120, it is possible to easily achieve the compacting and the reduction of weight of the guard member 132.

Sixteenthly, by using metal as the material of the guard member 132 and the material of the setting plate, it is possible to protect the fuel pump unit 120 more surely and hence, the consideration on the protection of the fuel pump unit 120 is enhanced.

Seventeenthly, as shown in Fig. 8, this embodiment is characterized in that the fuel tank 42 includes the plurality of car-body side fastening holes 135 and at least one of the car-body side fastening holes is formed of the elongated hole 139 extending outwardly with respect to the fuel tank 42 or the slit-added circular hole 138 to which the slit 137 which is communicated with the outside in the circular hole 136 is added.

When the excessively large external force is applied to the fuel tank 42, the fuel tank 42 is displaced laterally along the elongated hole 139 or the slit 137 and this displacement can absorb the external force. Accordingly, it is possible to protect the fuel pump unit 120 from the external force and to decrease the influence which the fuel pump unit receives.

Here, it is possible to suitably combine the first to twelfth manners of operations enumerated above and the structures which bring about such manners of operations with the thirteenth to seventeenth manners of operations enumerated above and the structures which bring about such manners of operations without any problem.

### INDUSTRIAL APPLICABILITY

The fuel tank structure of the motorcycle according to the present invention is suitably applicable to the scooter-type motorcycle.

## Claims

1. Fuel tank structure of a motorcycle adopting a scooter type in which a fuel tank (42) is arranged below a step floor (33) and a fuel pump unit (120) is incorporated in the fuel tank (42), a setting plate (121) mounting the fuel pump unit (120) on the fuel tank (42), wherein an upper surface portion of the pump unit (120) is suppressed and formed by the setting plate (121) and, at the same time, an opening portion (127, 129) which allows a pipe (124) or a harness (128) which extends from the fuel pump unit (120) to pass therethrough is formed in the setting plate (121).

2. Fuel tank structure according to claim 1, wherein the fuel pump unit (120) is configured such that the fuel pump unit (120) is extended downwardly into the inside of the fuel tank (42) and, at the same time, a guard member (132) which extends downwardly below the fuel pump unit (120) is mounted in the inside of the fuel tank (42).

3. Fuel tank structure according to claim 2, wherein the guard member (132) is a cylinder which surrounds the fuel pump unit (120) and includes an opening (133) for accessories such as an intake port (91) of a pump, a float (94) for detecting running out of fuel or a suction filter (92).

4. Fuel tank structure according to any of claims 1 to 3, wherein materials of the guard member (132) and the setting plate (121) are metal.

5. Fuel tank structure according to any of claims 1 to 4, wherein the fuel tank (42) includes a plurality of car-body side fastening holes (135) and at least one of the car-body side fastening holes is formed of an elongated hole (139) extending outwardly with respect to the fuel tank (42) or a slit-added hole (138) to which a slit (137) which is communicated with the outside is added.

## Patentansprüche

1. Kraftstofftankstruktur eines Motorrads vom Scooter-Typ, bei dem ein Kraftstofftank (42) unter einem Trittboden (33) angeordnet ist und eine Kraftstoffpumpeneinheit (120) in den Kraftstofftank (42) aufgenommen ist, wobei die Kraftstoffpumpeneinheit (120) am Kraftstofftank (42) über eine Einstellplatte (121) angebracht ist, wobei ein oberer Oberflächenabschnitt der Pumpeneinheit (120) abgesenkt und von der Einstellplatte (121) gebildet ist, und gleichzeitig ein Öffnungsabschnitt (127,129) der ein Passieren eines Rohrs (124) oder eines Kabelbaums (128), das bzw. der sich von der Kraftstoffpumpeneinheit (120) erstreckt, durch diese ermöglicht, in der Einstellplatte (121) ausgebildet ist.

2. Kraftstofftankstruktur nach Anspruch 1, wobei die Kraftstoffpumpeneinheit (120) so konfiguriert ist, dass sich die Kraftstoffpumpeneinheit (120) nach unten ins Innere des Kraftstofftanks (42) erstreckt und gleichzeitig ein Schutz- bzw. Abschirmungselement (132), das sich nach unten unter die Kraftstoffpumpeneinheit (120) erstreckt, im Inneren des Kraftstofftanks (42) angebracht ist.

3. Kraftstofftankstruktur nach Anspruch 2, wobei das Schutzelement (132) ein Zylinder ist, der die Kraftstoffpumpeneinheit (120) umgibt, und eine Öffnung (133) für Zusatzvorrichtungen, wie z.B. einen Einlassanschluss (91) einer Pumpe, einen Schwimmer (94) zum Erfassen eines Auslaufens von Kraftstoff oder einen Ansaugfilter (92) aufweist.

4. Kraftstofftankstruktur nach einem der Ansprüche 1 bis 3, wobei Materialien des Schutzelements (132) und der Einstellplatte (121) aus Metall sind.

5. Kraftstofftankstruktur nach einem der Ansprüche 1 bis 4, wobei der Kraftstofftank (42) mehrere fahrzeugkörperseitige Befestigungslöcher (135) aufweist und mindestens eines der fahrzeugkörperseitigen Befestigungslöcher aus einem länglichen Loch (139), das sich in Bezug auf den Kraftstofftank (42) nach außen erstreckt, oder aus einem Loch (138) mit zusätzlichem Schlitz, bei dem ein Schlitz (137), der mit der Außenseite in Verbindung steht, hinzugefügt ist, gebildet ist.

## Revendications

1. Structure de réservoir de carburant d'une motocyclette de type scooter, dans laquelle un réservoir de carburant (42) est agencé au-dessous d'un marchepied (33) et une unité de pompe à carburant (120) est incorporée dans le réservoir de carburant (42), une plaque de réglage (121) permettant de monter l'unité de pompe à carburant (120) sur le réservoir de carburant (42), dans laquelle une partie de surface supérieure de l'unité de pompe (120) est supprimée et formée par la plaque de réglage (121) et en même temps, une partie d'ouverture (127, 129) à travers laquelle un tuyau (124) ou un faisceau électrique (128) qui s'étend à partir de l'unité de pompe à carburant (120) peuvent passer, est formée dans la plaque de réglage (121).

2. Structure de réservoir de carburant selon la revendication 1, dans laquelle l'unité de pompe à carburant (120) est configurée de sorte que l'unité de pompe à carburant (120) est étendue vers le bas dans l'intérieur du réservoir de carburant (42) et en même temps, un élément de protection (132) qui s'étend vers le bas au-dessous de l'unité de pompe à carburant (120) est monté dans l'intérieur du réservoir de carburant (42).

3. Structure de réservoir de carburant selon la revendication 2, dans laquelle l'élément de protection (132) est un cylindre qui entoure l'unité de pompe à carburant (120) et comprend une ouverture (133) pour des accessoires tel qu'un orifice d'admission (91) d'une pompe, un flotteur (94) pour détecter la sortie du carburant ou un filtre d'aspiration (92).

4. Structure de réservoir de carburant selon l'une quelconque des revendications 1 à 3, dans laquelle les matériaux de l'élément de protection (132) et de la plaque de réglage (121) sont du métal.

5. Structure de réservoir de carburant selon l'une quelconque des revendications 1 à 4, dans laquelle le réservoir de carburant (42) comprend une pluralité de trous de fixation du côté de la caisse (135) et au moins l'un des trous de fixation du côté de la caisse est formé avec un trou allongé (139) s'étendant vers l'extérieur par rapport au réservoir de carburant (42) ou un trou supplémentaire fendu (138) auquel une fente (137) qui communique avec l'extérieur est ajoutée.
